# EUROPEAN PATENT SPECIFICATION

(11) **EP 3 977 055 B1**
(45) Date of publication and mention of the grant of the patent: **17.12.2025**
(21) Application number: 20732274.4
(22) Date of filing: 03.06.2020
(51) Int. Cl.: G01C 21/34

(54) **A METHOD OF DETERMINING A ROUTE**
VERFAHREN ZUR ROUTENBESTIMMUNG
PROCÉDÉ DE DÉTERMINATION D'UN ITINÉRAIRE

(30) Priority: 03.06.2019 GB 201907862
(43) Date of publication of application: 06.04.2022
(73) Proprietor: Relish Technologies Limited, London SE1 0LH (GB)
(72) Inventor: PUTNAM, Thomas, London, SE1 0LH (GB); JENNER, Mark, London, SE1 0LH (GB); SWINGLER, Roland, London, SE1 0LH (GB); LATINOPOULOS, Haris, London, SE1 0LH (GB); STANLEY, Megan, London, SE1 0LH (GB)
(74) Representative: Boult Wade Tennant LLP
(86) International application number: PCT/GB2020/051333
(87) International publication number: WO 2020/245576

(56) References cited:
- WO-A1-2016/135561
- WO-A1-2016/135561
- WO-A1-2017/100780
- WO-A1-2017/100780
- US-A1- 2010 036 599
- US-A1- 2015 285 651
- US-A1- 2016 102 990

## Description

The present disclosure relates to various methods of determining a route and associated methods for supplementing a map and detecting traffic.

Traditionally, route determination between two points on a map functions by defining a plurality of links and nodes which overlie the physical connections on the mapped area. The links represent the roads and/or pathways in the area and the nodes represent junctions. The links connect adjacent nodes to represent the roads between each junction. In order to calculate a route between a start point and an end point on the map, a sum over different combinations of links between the start and the end points is carried out and the total distance and/or time predicted to travel the route is then minimised. This route is then presented to the user for them to navigate with.

Recently, there has been an increase in the number of users of non-automobile modes of transport, such as cycling, scooters and mopeds. For such users the traditional method of minimising distance and/or time may not be optimal. There is therefore a need for an improved method for determining a route.

US 2017/192437 A1 discloses a system and method for providing routing instructions to one or more autonomous vehicles. The system and method includes identifying a destination of an autonomous vehicle; identifying a starting position or an initial location of the autonomous vehicle; receiving autonomous vehicle sensor data; receiving one or more routing goals for a routing plan for the autonomous vehicle; generating one or more route modification parameters; and generating a route plan for the autonomous vehicle based on (a) the destination, (b) the starting position or the initial location, (c) the one or more route modification parameters and (d) the one or more routing goals.

The allocation of a cost score to a turn is noted, this cost relates to the likelihood of success of failure of the autonomous vehicle of making the turn. This is relevant as for effective autonomous driving, the likelihood of failure should be reduced. This success or failure value is associated with a particular manoeuvre type and used in the route planning. This is a simplistic analysis which does not take into account the particular parameters or features of a given junction, but instead merely looks at the manoeuver type.

US 2018/128630 A1 discloses adaptive navigation techniques that allow navigation systems to learn from a user's personal driving history. As a user drives, models are developed and maintained to learn or otherwise capture the driver's personal driving habits and preferences. Example models include road speed, hazard, favoured route, and disfavoured route models. Other attributes can be used as well, whether based on the user's personal driving data or driving data aggregated from a number of users. The models can be learned under explicit conditions (e.g., time of day/week, driver ID) and/or under implicit conditions (e.g., weather, drivers urgency, as inferred from sensor data). Thus, models for a plurality of attributes can be learned, as well as one or more models for each attribute under a plurality of conditions. Attributes can be weighted according to user preference. The attribute weights and/or models can be used in selecting a best route for user.

The routing is expressly focused upon car drivers, with appropriate modifications to ensure that this is the case. Data is recorded about the user, including which roads they typically use and then this is used to develop a profile of their preferences. There is no user input from the user to provide an indication of attributes which it is not simple to determine. For example, a user may take a certain type of road because it is the only route they are aware of. This may be recorded as the user having a preference for this type of route as they drive on it for long periods, when this is due to necessity rather than preference. The user is able to input if there has been an accident, which adjusts the data recorded. However, the user-input data itself is not used for any predictive modelling - merely as a modifier to adjust or cancel any data recorded on that route.

Certain turns disfavoured by the user can be ignored - for example if their vehicle is unable to make a U-turn on that type of road. However, there is no cost value given to the turn itself or used in assessing a suitable route; it is merely ignored as an option.

US 2006/0184314 A1 discloses a multi-modal navigation system. The navigation system provides navigation information (including routes, maps, directions, and navigation instructions) for a plurality of transportation modes including, but not limited to, automobiles, pedestrian walking, trains, subways, and the like. The multi-modal navigation system may be embodied in integrated navigation devices, as stand-alone navigation systems on a variety of computing devices, as a navigation service on a computing device or as a web service, and the like. The multi-modal navigation system includes route data for a plurality of transportation modes. Route data for the plurality of transportation modes may be integrated, may be separately available, or any combination thereof.

The navigation system finds a route using standard routing algorithms to find a lowest cost for the well-known features of monetary spend, time and distance. The user can select which of these they wish to optimise for.

US 2010/036599 A1 discloses methods and systems for determining a transportation route include determining a risk value for each of a set of candidate routes between an origin and a destination based on one or more safety factors or criteria, and comparing the risk values to determine the route. The risk values may be based upon default or selected safety factors, and may correspond to a normalized cost per unit distance. Safety factors may be derived from map data, obtained from user input and/or derived from other statistical data. User preferences and priorities may be included in the process for determining a route. Determined routes may be displayed, and may indicate especially risky portions of the determined route.

Known data regarding routes is combined in order to determine a risk for the route or links of the route. The user is able to indicate which safety factors they would like to take into account, and their ordering. User-input is referred to in the context of indicating the start of the journey, or the ranking of safety factors. There is no use of user input to indicate subjective, personal views of the road/route and its safety. Instead, the entire model is based upon known stored data such as map data, a time to traverse the route or the like.

WO 2010/073053 A1 discloses a methodology and systems realizing it, related to the collection, by means of a GPS-based Personal Navigation Assistant and aggregation, central processing and distribution (by means of a Central System) of dynamic information related to the road traffic flow (i.e., the traveling speed of a vehicle for every road segment it travels through, correlated with other vehicular and road parameters), thereby augmenting the existing static navigation map data with dynamic ones and providing routing and navigation capabilities to current Personal Navigation Assistants. Software, interacting with typical Personal Navigation Assistant hardware, will record characteristics and parameters associated with each road segment of the travelled path (e.g. the time or speed it takes to go through that road segment, the current time and date, the weather conditions, the vehicle type, whether it is a work-day or some holiday, etc.). After the offline uploading and post-processing of the users' trace data by a Central Server System, this data will be incorporated in a *"global map"* (consisting of a segmented, special purpose and distributed, spatial database). The Personal Navigation Assistant users will thereafter be able to obtain, store within their Personal Navigation Assistants and use any part of the *"global map",* combined with the available static maps of their device, in order to obtain routing decisions, based on: a) dynamic (space/time-dependent) traffic data, i.e. the combination of time-of-the-day, day-of-the-week, season-of-the-year, type-of-vehicle, type-of-weather, road-conditions, and type-of-holiday; and b) decision criteria, such as, shortest travelling time, less cost, or a combination thereof, as desired by the user/driver.

Data is collecting by recording a GPS trace of a user's phone, with no data input by the user or estimation of data for unknown streets.

US 2018/252543 A1 discloses a navigation system to identify routes that take safety considerations into account. The system accesses safety data from various sources and computes safety data for individual road segments of a map database at multiple times for each road segment. The road segment safety data is used when determining routes for requested trips, including estimating the times that the various road segments on the route will be traversed and determining the safety of each road segment at that time.

The purpose of this disclosure is to take safety into consideration when using a ride-hailing service, such as provided by the Applicant thereof, Uber Technologies Inc.. The *"safety"* parameters discussed therein are relevant for this context. For example, the number of passengers in the vehicle or the safety of the pick-up location. A weighted score of known stored data is used to determine a safety value, there is no measurement of a user input for the safety of a given route or link. Known values are adjusted based upon predicted weighting to adjust for the safety of a road varying at different times, but a safety value for an unknown road is not calculated. That is, the relevant data must exist in order to calculate the weighted value.

US 2015/285651 A1 discloses systems and methods that find the quickest route between two locations on a graph with multi-edge constraints.

WO2016135561 A1 discloses a method and apparatus for determining the safest route within a transportation network. A risk coefficient, for example based on the number of accidents, is associated with each route segment. An overall risk factor for each route is determined by aggregating (summing) the risk coefficients of the route segments. The safest route is determined based on the determined risk factors. The risk coefficient may take into account real-time conditions (weather, traffic) as well as driver behavior

WO2017100780 A1 discloses an interactive telematics system with an analysis unit which is configured to identify several potential routes from a departure location to a destination and calculates attributes of each of the potential routes.

A method of determining a route between a start point and an end point on a map defined by a plurality of links for representing roads and a plurality of nodes for representing junctions between roads is provided, the links meeting at respective nodes and comprising a plurality of features comprising distance and/or time and a further feature, the method comprising: defining a cost parameter for representing the relative weighting of each of the plurality of features, wherein each of the links is associated with a respective cost value representing the evaluation of the cost parameter over that link; finding a route from the start point to the end point via links and nodes that minimises the summed cost values over the route.

The cost parameter is based on a plurality of features of the link comprising distance and/or time and a further feature.

This method allows non-conventional parameters to be used to characterise the route which provides better routing, especially for road users who are not in a car. There may be a single further feature or a plurality of further features.

The further feature may comprise one or more of: a safety feature; a health feature; a traffic feature; a user-input feature; and/or a physical road feature. These are features which are particularly useful to alternatively characterise the route.

The cost value may be calculated by applying a weighting coefficient to the plurality of features. This allows the relevance of each feature to be adjusted accordingly.

The weighting coefficient may be defined by the cost parameter. This allows the relevance of each feature to be easily defined in order to arrive at the relevant cost value.

The weighting coefficient may be adjusted based upon a user profile. This ensures that a user's personal preferences are taken into account when determining the route.

A method of supplementing a map with associated cost values is provided, the map defined by a plurality of links for representing roads and a plurality of nodes for representing junctions between roads, the links meeting at respective nodes and comprising one or more features, and each link being associated with a cost value based upon the one or more features of the link representing the evaluation of a cost parameter, the cost parameter for representing the relative weighting of each of the one or more features, over that link, the method comprising: collecting data from a user at a location on the map corresponding to a first link, the data relating to the feature(s) of the first link; and updating the feature value of the first link based upon the data.

This allows the cost value to be updated to reflect changes to the underlying road networks.

The data may comprise user feedback data. This data is likely to be incomplete and variable based upon changes to road networks and hence updating this data is particularly important.

The method may further comprise the steps of: determining a user profile comprising stored user data; and comparing the collected data to the stored user data to generate contextualised data, wherein the updating of the feature value is based upon the contextualised data. This generation of contextualised data via the comparison ensures that any updates to the feature value take the user's characteristics into account. For example, a slow rider recording a slow time to traverse a link will not necessarily indicate that the link itself is slow.

The data may not be a direct measure of the feature. Instead, the feature may be derived from the data to allow features which are not easy to measure to be updated.

A method of determining a route between a start point and an end point on a map defined by a plurality of links for representing roads and a plurality of nodes for representing junctions between roads is provided, the links meeting at respective nodes, at least one node of the plurality of nodes being a complex node having at least three links extending therefrom, the links and the complex node each comprising one or more features, the method comprising: defining a cost parameter for representing the relative weighting of each of the plurality of features, wherein each of the links is associated with a respective cost value based upon the one or more features of the link representing the evaluation of the cost parameter over that link; allocating for each complex node a cost value for each of a plurality of pairs of the links meeting at that node, the cost value for each pair representing the evaluation of the cost parameter for traversing the junction represented by the node from one link to another link of the pair; finding a route from the start point to the end point via links and nodes that minimises the summed cost values over the route.

A method of supplementing a map with associated cost values is provided, the map defined by a plurality of links for representing roads and a plurality of nodes for representing junctions between roads, the links meeting at respective nodes, at least one node of the plurality of nodes being a complex node having at least three links extending therefrom and having a cost value based upon one or more features of the complex node associated with each of a plurality of pairs of the links meeting at that node, the cost value for each pair representing the evaluation of the cost parameter for traversing the junction represented by the node from one link to another link of the pair, the method comprising: collecting data from a user at a location on the map corresponding to a first complex node, the data relating to the feature(s) of the first complex node; and updating the cost value of the first complex node based upon the data.

Conventional systems only evaluate the cost of each link without taking the traversal of the node into account. The method may be particularly suitable for road users who are not in cars (i.e. bicycles, mopeds, scooters, etc.) and hence may have more difficulty in traversing a junction.

The present invention provides a method of determining a route according to claim 1.

The present invention also provides a further method of determining a route according to claim 2.

This allows incomplete map data to be supplemented by estimating the unknown data. This may be particularly useful for user-inputted data which is likely to be at least partially incomplete. There may be a single further feature or a plurality of further features.

The unknown feature is a user-input feature. It is likely that user-input features may be incomplete data as not all roads will be traversed and/or rated by a user. By a user-input feature this is a piece of data input by the user for the purpose of rating or qualifying the link and/or node. This may exclude, for example, passive recording of driving choices of the user (such as the turns they take, their speed on certain roads, or the frequency which they use certain types of road). The user-input data may be user feedback data. That is, user-input data may be data input by the user into the system in order to, and/or with the purpose of rating a link or route. The user-input data may relate to parameters which are not easy to otherwise measure by sensing. User-input data may be subjective data personal to the user, that cannot be directly determined from a weighting of parameters. Instead, the relationship between a given user's subjective data and known features may be determined in order to predict how that user would rate the unknown road. For example, this may be via a machine learning algorithm.

The remaining feature(s) may be publically accessible data. There are large amounts of publically accessible data that is relatively complete regarding roads that can be accessed in order to determine these relationships.

The estimation may be carried out via machine learning. Machine learning is a powerful tool to analyse this data and identify the relevant relationships.

A method of determining a route between a start point and an end point on a map defined by a plurality of links for representing roads and a plurality of nodes for representing junctions between roads is provided, the links meeting at respective nodes and comprising one or more features, the method comprising: determining a user profile; defining a cost parameter the cost parameter for representing the relative weighting of each of the one or more features, wherein each of the links is associated with a respective cost value representing the evaluation of the cost parameter over that link; weighting a feature value of the one or more features of each link based upon the user profile; finding a route from the start point to the end point via links and nodes that minimises the summed cost values over the route.

By taking the user profile into account, a more suitable route for that user can be selected.

The user profile may comprise data relating to one or more of: a typical speed of a user; a user's risk appetite, a user's road preferences. This data can have a significant impact upon the route which should be chosen.

The methods may further comprise the step of collecting data relating to the user profile and updating the user profile based upon the collected data. This ensures that a user profile is updated as a user develops, for example as they become a more confident cyclist.

A method of detecting traffic with each of a plurality of mobile telephones comprising a microphone and a location determination device is provided, comprising the steps of: sensing a noise level using the microphone and location information using the location determination device; transmitting the noise level and the location information of each mobile telephone to a server; the server estimating a level of traffic at a particular location with the noise level.

This allows traffic information to be passively collected in order to provide information for routing algorithms.

The method may further comprise the steps of: determining a time that the noise level was detected; and associating the estimated level of traffic with the determined time. This allows peaks in traffic time (such as rush hour) to be identified. This can prevent roads being incorrectly characterised as constantly busy when there is instead surges.

The time may be determined: locally by the mobile telephone; or remotely as the time the noise level and location information is received by the server.

The present disclosure will make reference to the accompanying Figures in which:
Figure 1 shows a schematic of a map comprising links and nodes;
Figure 2 shows the map of Figure 1 following a traditional route selection;
Figure 3 shows the map of Figure 1 following a route selection according to the present disclosure;
Figure 4 shows a schematic of a complex node for a map;
Figure 5 shows the map of Figure 1, with incomplete data for certain links in the map;
Figure 6 shows a schematic plan view of a traffic detection scenario;
Figure 7 shows a flowchart of a method for generation of a map;
Figure 8 shows a flowchart of a method of applying cost values to a map;
Figure 9 shows a flowchart of a method of estimating missing data for a map according to the present invention;
Figure 10 shows a flowchart of a method of determining a cost function;
Figure 11 shows a flowchart of a method of using a user profile;
Figure 12 shows a flowchart of a method of defining a user profile;
Figure 13 shows a flowchart of a method of updating a dynamic user profile;
Figure 14 shows a flowchart of a method of determining a route according to the present disclosure; and
Figure 15 shows a flowchart of a method of detecting a level of traffic according to the present disclosure.

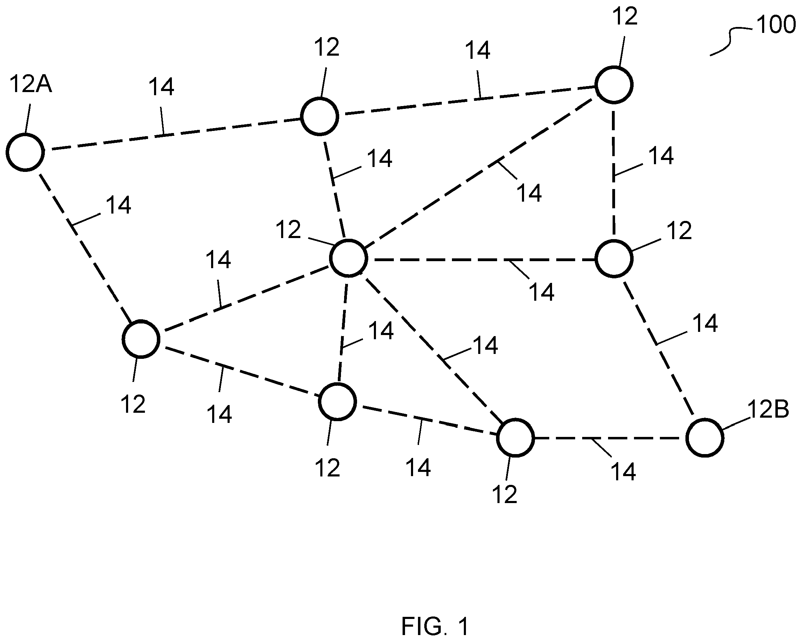

Figure 1 shows a map 100 suitable for use in methods according to the present disclosure. The map 100 is defined by a plurality of links 14 and nodes 12. The map 100 generally overlies a physical map of roads or pathways. The links 14 correspond to the roads or pathways in the underlying physical map and the nodes 12 represent junctions between the roads 14. While the terminology *"roads"* and *"junctions"* is used throughout the specification, it is appreciated that the present disclosure may be applied to users traveling on non-traditional pathways such as pedestrians or bicycles and *"roads"* must be read broadly to cover any of these alternative pathways such as tracks, cycleways, footpaths, etc. and "*junctions*" must be read broadly as any point where two of such *"roads"* meet, including turnings, cross-roads, forks, roundabouts, slip roads, etc.. It is also noted that while the real life roads may include turns or bends, it is not necessary to represent these in the links 14. Instead, the links 14 may simply be represented as straight lines as shown in Figure 1. The completed map includes the plurality of nodes 12 depicted, each of which are connected by the links 14 in accordance with the underlying road structure. Is must be understood that where a link 14 is referred to any physical features discussed in relation to the link 14 are physical features of the road which this link 14 corresponds to. Likewise, where a road is referred to in relation to any features of the map 100, these features of the map 100 are of the link 14 which corresponds to that road. The same is true in relation to junctions and nodes 12.

A user seeks to get from a start point generally at node 12A to an end point generally at node 12B. In the depicted examples the user's start and end points generally correspond to nodes 12A, 12B already on the map. However, it is possible that the user may have a start and/or end point which is not at a node 12. In such a situation, the user may be routed to the nearest suitable node 12 or link 14 as a first step of the route. While the entire present disclosure may equally apply to any suitable road user, it may find particular relevance when it is used for more vulnerable road users. For example, for the route planning of cyclists. This may be the case for every method disclosed herein.

The following terminology will be used throughout the specification and should be interpreted as follows.

A *"feature"* is a characteristic of a street for which data can be obtained. For example, the traffic level, road surface roughness, elevation gain or pollution level.

A *"feature value"* is the actual data for a given feature. For example, a high traffic level may have a feature value of 7 out of 10 and a low traffic level may have a feature value of 3 out of 10.

A *"weighting coefficient*" is the weighting given to a particular feature when calculating the cost for a link for multiplication with the feature value.

A *"cost parameter*" is a definition of the overall value to be minimised. For example, this may traditionally be distance or time. Alternative cost parameters may include safety, healthiness, pleasantness or aesthetics. There may not be a measured value per se (i.e. pleasantness). A cost parameter may be a single feature, for instance distance may be both a cost parameter and a feature. The cost parameter comprises a set of weighting coefficients to provide a balance of feature values.

A *"cost value"* is the value given to a link to quantify the cost parameter over the link. The cost value is the output of the weighting coefficient(s) being applied to the feature value(s) required by the cost parameter. This is the weighted sum of the feature values based upon their respective weighting coefficient for the cost parameter.

A *"cost function"* represents the weighted sum of cost values over the route as defined by the cost parameter. For example, the cost function may be a root means square calculation.

As a first step of the method, a cost parameter is defined. As discussed above, known cost parameters are typically based upon distance and/or time. Each of the links 14 provided on the map 100 is associated with a respective feature value which is a feature evaluated over the link 14. The particular cost parameter defines a set of weighting coefficients used to determine the cost value that represents the evaluation of the cost parameter over that link 14. For example, if the cost parameter is distance each of the links 14 has an associated feature value of the distance which represents the physical distance of the road associated with that link 14 that the user travels to traverse the link. As the cost parameter is also distance, the weighting coefficient may be 1 for the feature of distance and 0 for all other features of the link 14. As such, the cost value for the link 14 is equal to the feature value. Likewise, for time, each of the links 14 is associated with a time that it takes to traverse the road associated with that link 14.

In order to find a route from the start point 12A to the end point 12B, a search is carried out and the cost function (the sum of the cost values) over the route is minimised. That is, the summation of the cost values of each of the links 14 selected for the route is minimised. Suitable searches are well known in the field of pathfinding and graph traversal and include, for example, an A* search algorithm.

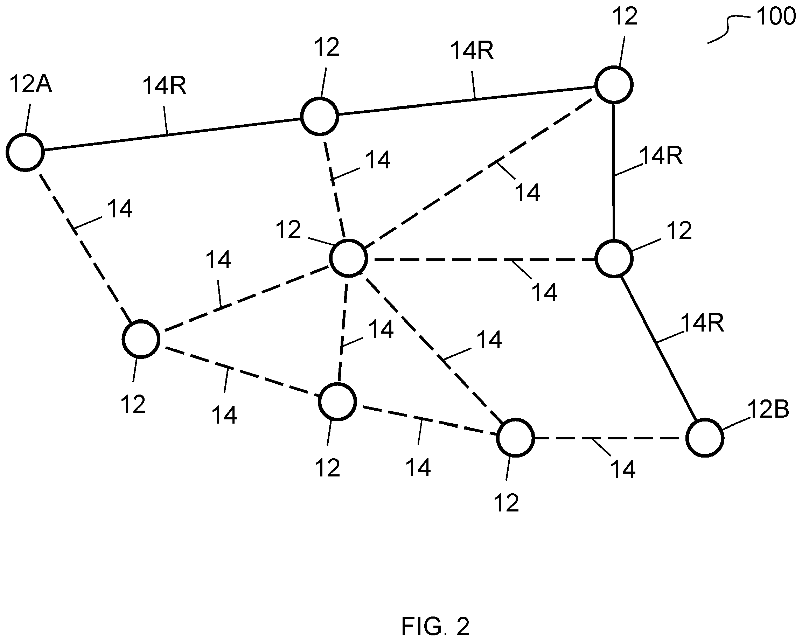

Figure 2 shows a possible solution to the search algorithm for a cost parameter based upon distance and/or time alone. In this example, the links 14R are chosen for the route to represent the quickest traversal from the start point 12A to the end point 12B. Thus, the time cost function is minimised over the route.

In order to achieve this quickest time, the links 14R may represent large highways with higher speed limits than other links 14 on the map 100. However, the route chosen in Figure 2 does not take into account other features which a user may desire to be incorporated into their route selection. This is particularly relevant for vulnerable road users (such as cyclists, moped riders, or scooter riders) and/or those who are not necessarily primarily concerned with the distance and/or time to traverse the start point 12A to the end point 12B. Instead, these users may be concerned with one or more of safety, changing gradient across the route, road quality, road type (tarmac/gravel/trail), number of bends, type of bends, twistiness, enjoyment, number of turns or junctions, type of turns or junctions, speed, acceleration, weather such as wind, points of interest, vehicle drop-off or charging points, dedicated infrastructure for the vehicle of choice (i.e. cycling infrastructure), street lighting, crime levels, avoidance or coordination with certain types of transport, calories burnt, number of bridges, number of tunnels, overhead coverage, aesthetics along the route and/or pollution (air quality) along the route.

Features such as these may particularly relevant for cyclists where the quickest route which may be on large highways can also be significantly less safe than alternative routes. Other features such as road quality, gradient change or pollution may not be a concern to a car driver. The car suspension is likely to reduce the effects of the road quality more significantly than for a cyclist, gradient likewise does not represent a particular concern as it is the car doing the hard work and pollution is filtered by the car's air conditioning system.

According to the present disclosure, an alternative cost parameter is defined. This alternative, or non-standard, cost parameter may be particularly relevant for the non-car road users. The alternative cost parameter is still based upon distance and/or time as a feature but includes a further feature. The cost parameter is a set of weighting coefficients for the plurality of features. The weighting coefficients include positive weightings for one or both of distance and time, and for the further feature. Typically, the alternative cost parameter will include a plurality of further features. These further features will be blended into the cost value by selecting appropriate weighting coefficients for the cost parameter in question.

The further feature may comprises one or more of: a safety feature; a health feature; a traffic feature; a user-input feature; and/or a physical road feature.

In particular examples, the further feature may be selected from one or more of safety, gradient, road quality, aesthetics, and/or pollution. The alternative cost parameter may include combinations of these features. The cost values over the route for the alternative cost parameter are summed and minimised as discussed above. Of course, the cost values are defined in such a manner as to produce the desired output. For example, one of the identified cost parameters is safety. Obviously the number to be minimised is not a value that increases with increased safety as the minimisation to find the best route would be minimising safety, which is clearly not intended. Thus, a user's risk appetite can be taken into account - a user with a greater risk appetite may prefer a route which is less safe than one with a low risk appetite. A risk appetite is the level of risk that a user is willing to accept in traversing the route.

Instead, the cost values may be defined in such a way so as to achieve this. For example, for a safety parameter, features may include: the number of accidents on a road, the types of vehicle on a road, the local crime levels and/or the type of pedestrian crossings. The weighting coefficient may also adjust a number which typically should be maximised into one to be minimised.

A health feature may be one of weather, calories burnt, pollution, greenness, and/or air quality.

A traffic feature may be one of speed, acceleration, the presence of other vehicles, the presence of other road users, and/or the presence of pedestrians. This includes the option for avoiding certain types of vehicle, such as avoiding large trucks.

A user-input parameter may be one of enjoyment, fun, aesthetics, and/or a route rating.

A physical road feature may be one of gradient of road, change of gradient along the road, road quality, road type (tarmac/gravel/trail), smoothness of the road, number of bends, angle of bends, twistiness of the road, number of turns or junctions, types of turns or junctions, points of interest, vehicle drop-off or charging points, vehicle-specific infrastructure, street lighting, number of bridges, number of tunnels, overhead coverage.

Of course, features may be applicable across many different parameters. For example, vehicle-specific infrastructure (listed as a physical road feature) may refer to the presence of cycle lanes which would also be a suitable feature for a parameter directed towards safety.

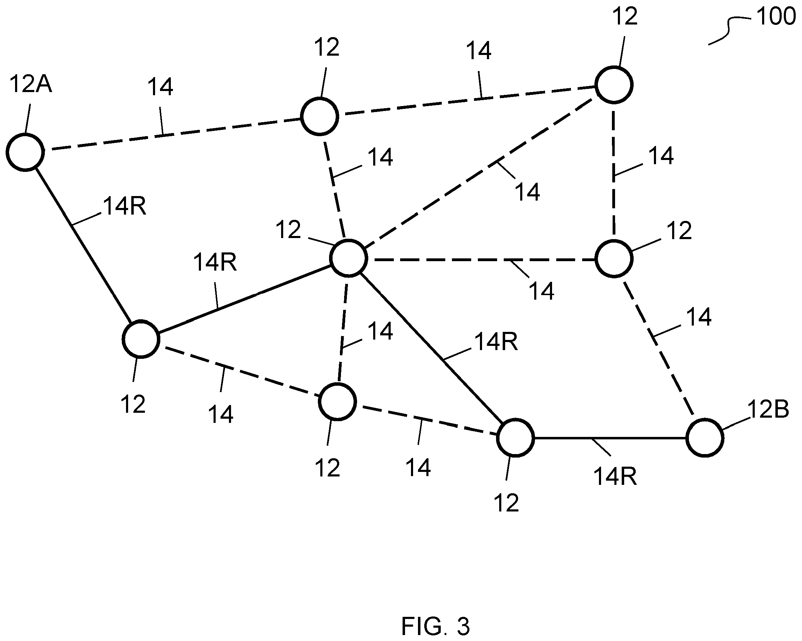

In this sense, a cyclist may prefer a route which is slightly longer than the route depicted in Figure 2 but is on significantly smaller and safer roads. This example is set out in Figure 3 which includes a route having more turns which may be longer and/or slower than the route of Figure 2, but the links 14R may represent smaller roads which may be safer for the cyclist.

The use of these non-standard parameters when defining the cost function allow for alternative routes to be selected which represent issues not considered in current mapping systems. Of course, the non-standard parameters do still take distance/time into account to avoid merely maximizing, for example, aesthetics and taking the user on a tour of all of the most aesthetically pleasing roads in the country. While the above discussion focuses upon minimizing the alternative cost parameter for the links 14 in the route, it is acknowledged that the cost parameter for the nodes 12 in the route may also be defined according to aspects of the disclosure as discussed below and incorporated into the cost function minimization.

A further method according to the present disclosure relates to the supplementation of a map with associated cost values. The map 100 may generally be as discussed above in relation to Figure 1 and include a plurality of links 14 connecting nodes 12. Each of the links 14 have an associated cost value representing the evaluation of a cost parameter over that link. Data may be collected from a user on or near to the road that corresponds to a particular link 14. The data relates to the feature value for a feature for a cost parameter. The data may be a direct measure of the feature value, such as for a measure of the vibrations along the road to determine road quality. Alternatively, the data may be merely related to the feature value and information about the feature value is derivable indirectly from the data. The cost value for the particular link 14 is then updated based upon the collected data.

In some embodiments, the feature may be user feedback, which may be input as user-input data. This feedback is provided by the user to provide an indication of a parameter of the road or route. The user input may be provided expressly for this purpose. The user feedback may be input by the user via an electronic device such as a smartphone or routing unit. The user input may be data which is not collected passively, but instead requires an active input of data by the user.

For example, if the cost parameter is in relation to aesthetics or safety it may be that the user can input when they have ridden on a road that they consider particularly safe and/or unsafe, or one that has aesthetic merit. Alternatively, the data may be automatically collected by one or more sensors on a user. Preferably, the sensors may be auxiliary sensors that the user is already carrying. For example, the sensors may be those provided within a mobile phone. In this sense, the mobile phone sensors can be used to determine, for example, a gradient of a road associated with a link 14, the road quality (such as by using the accelerometer of a mobile phone to detect vibrations as the road is traversed) and the like. Alternatively, or additionally, the microphone of a mobile phone may be used to determine a road quality based upon the amount of noise generated when traversing the road. Vehicle-mounted computers, in particular bicycle-mounted computers, may also or alternatively provide the sensors for gathering data. These may be separate computers which attach to the bicycle or may be integrated therein. For example, in bicycles used for bike-sharing schemes there are already a number of integrated sensors, including GPS sensors, which may be used to collect data.

When collecting particular data for a road represented by a link 14 it may be necessary to generate contextualised data based upon a user profile. In this sense, contextualised data means data that has been adjusted to take past information regarding the user and/or road into account.

The user profile is determined and comprises stored user data that relates to the feature value to be updated. For example, if a user profile includes stored user data that indicates that the user is typically a fast cyclist (such as a typically fast average speed, higher speeds than other users, etc.), any information regarding the time taken to traverse a particular road should be used to generate the contextualised data accordingly. The generation of contextualised data may include the steps of reviewing a distribution of stored data relating to the feature value of further users; and determining where the stored data relating to the user collecting the data fits within this distribution. Likewise, information regarding the user's typical mode of transport can be used to generate the contextualised data. The generation of contextualised data may comprise weighting the collected data before using the weighted data to update the feature value.

For example, if a particular road represented by a link 14 has consistently received user data that indicates that it is a smooth road (i.e. there is little vibration detected) and a particular user passes along that road and the data received from the user indicates a large amount of vibration it can be derived that the particular user may be on a vehicle that is more susceptible to variations in road surface. For example, the user may have a particularly hard suspension that is transferring small variations of the road surface to the sensor. The update to the feature value can then use appropriately contextualised data. This may be by completely ignoring the data, by giving it a lower relevance than other data or by applying a multiplier to the measurements. Alternatively or additionally it may be noted that the collected data compares favourably or unfavourably to the stored user data. In this sense, even though the user has recorded a large amount of vibration it may be that in the context of their stored data this is a lower amount than usual and hence the road is smooth. Accordingly, the data indication a large amount of vibration is still actually indicating a smooth road and the feature value should be updated accordingly. In this manner, the data collected by the users can be more accurately classified and used appropriately.

In the same sense, if a normally slow rider (based upon their user profile) records a speed of 25 kilometres per hour (15.5 miles per hour) on a given road, the contextualised data may result in a feature update that generally indicates a feature value of a fast road. However, if a normally fast rider (based upon their user profile) records the same speed, the contextualised data may result in a feature update that generally indicates feature value of a slow road.

In the same sense, a user profile can be used when determining a route between a start point and an end point for a user. In particular, after the cost parameter has been defined, the cost value of each link 14 may be weighted based upon the user's profile. In particular, the weighting coefficients can be adjusted based upon the user profile. The user profile may be, for example, the user's speed or preference for balance between, for example, safety and speed. The user profile typically does not extend to consider features such as the mode of transport. The user profile may, in part, be defined by data regarding a user's previous trips. For example, if previous trip data shows that a user has consistently turned off busy roads onto quieter roads it can be derived that the user has a preference for safer, slower roads. Data collected in this manner may be particularly valuable as it provides insight into the user which they may not be fully aware of. In this sense, the route selected for the user may take into account which features that user particularly cares about and provide them with a route which fits their preferences. For example, a user that values speed above safety may be presented with a different route than a user who is ultracautious.

A user profile for a particular user may be compared with data relating to other user profiles in order to predict whether said user will like a certain route. For example, if there is data showing that users with a particular blend of safety and speed concerns dislike a certain road, it can be predicted that the further user with a similar user profile will also dislike that route.

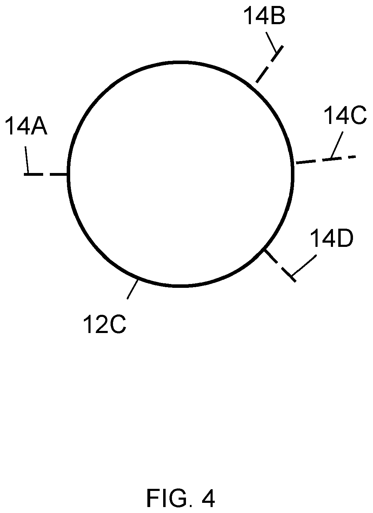

Figure 4 shows a further method according to the present disclosure for improving route planning across a particular node 12C. The node 12C is a complex node in that it has at least three links 14 A-D extending therefrom. The complex node 12C represents a junction in the real world with at least three roads, corresponding to links 14A-D, meeting at the junction. In the real world, all of the ways to cross the junction represented by the complex node 12C are not equal. For example, a right turn across traffic (in countries that drive on the left-hand side of the road) may be more difficult, dangerous and/or slower than a left turn (and vice-versa in countries that drive on the right-hand side of the road). As such, any user traversing this node 12C has a number of options for which route to take across the node. Each of the links 14B, 14C and 14D generally extend in the same direction from the node 12C and, assuming an end point also generally in that direction, it may be possible to reach the end point by any of these links 14B, 14C and 14D. Typical routing algorithms do not address the cost value of the node traversal when calculating the overall cost function.

In order to traverse the node, a plurality of pairs of links 14 can be selected. These pairs represent the type of manoeuver needed to cross the junction. For example, the user may need to make a complete stop at the junction which can significantly affect their speed.

In addition to the definition of the cost parameter above for each of the links 14, with each of the links 14 associated with the respective cost value representing the evaluation of the cost parameter of that link 14, the method also includes allocating for each complex node 12C a cost value for each of the pairs of links 14 that can be used to traverse the complex node 12C. This cost value represents the evaluation of the cost parameter for traversing the junction which is represented by the node 12C from one link to another link of the pair. For example, for a start point generally to the left of the complex node 12C of Figure 4 and an end point generally to the right of the complex node 12C of Figure 4, there may be three pairs defined, from 14A to 14B, 14A to 14C and 14A to 14D. While the schematic in Figure 4 is relatively simple, the underlying road structure could be particularly complex. For example, to get from link 14A to link 14D may require a dangerous and/or slow right hand turn across traffic. Accordingly, allocating the cost value for each of the pairs of links allows the complex node 12C itself to be a factor during the minimisation of cost parameter over the overall route. As a result, complex junctions are likewise factored into the route planning. This may be particularly relevant for users such as cyclists where junction safety and traversal time can be a greater concern compared to car drivers.

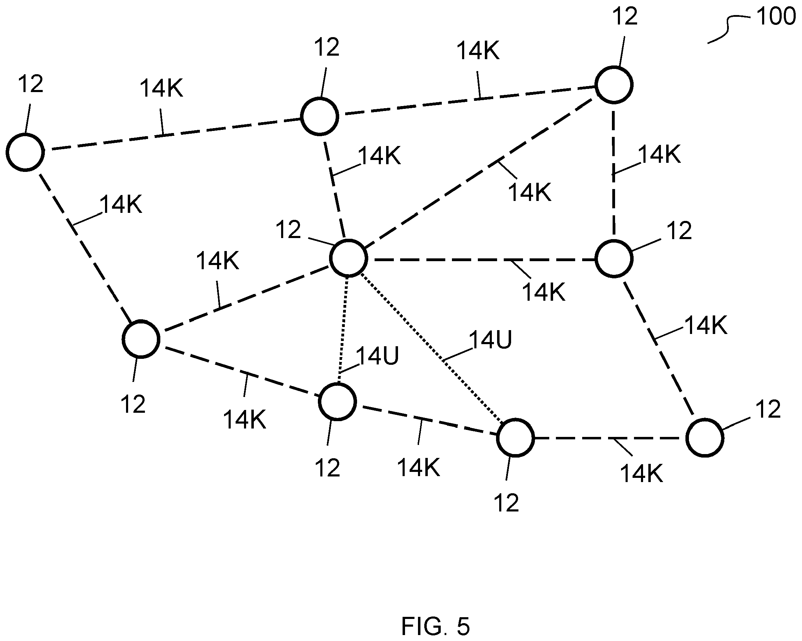

A method according to the present invention relates to determining a route based upon a cost parameter, where the feature value of one of a plurality of features required to calculate the cost value for one or more of the links 14 is unknown. That is, one of the features that has a non-zero weighting coefficient according to the cost parameter. As such the cost value for one or more of the links 14 on the map 100 is incomplete or unknown. An example map 100 is shown in Figure 5 in which each of the feature values for a particular cost parameter is known for a first group of the links 14. The first group of the links 14 is shown by the dashed lines and each link denoted 14K in Figure 5. A second group of the plurality of links 14 is shown with the dotted lines and each link denoted 14U. For the second group 14U the one of the feature values for the cost parameter is unknown.

A relationship is identified between the plurality of feature values used to derive for the unknown cost value. For example, the cost parameter may be safety and the known feature values for the second group 14U include distance, time and pollution with an unknown feature value for user safety rating. It may be identified that a road with significant levels of pollution and which can be traversed in a quick time may be rated by users as unsafe as it may, for example, be a large highway. Accordingly, this identified relationship can then be used to estimate the unknown feature value (user safety rating) for the links in the second group of links 14U where the user safety rating is not known. This allows the cost value to be calculated as described above. In some examples, the feature value per se is not estimated but an adjustment weighting is applied to the incomplete cost value which can be calculated from the known feature values. Once the cost value is estimated for the links in the second group 14U, the route finding as discussed above can take place.

In some embodiments, the unknown feature may be user feedback, which may be input as user-input data. This feedback is provided by the user to provide an indication of a parameter of the road or route. The user input may be provided expressly for this purpose. The user feedback may be input by the user via an electronic device such as a smartphone or routing unit. The user input may be data which is not collected passively, but instead requires an active input of data by the user.

The user-input data may be subjective data. Such subjective data may depend upon a particular user's likes and dislikes. For example, some users may prefer winding country lanes, while others prefer long and straight major roads. It may therefore not be possible to immediately derive the feature solely based upon stored data. Instead, it may be necessary to obtain a number of user-input values, which can then be used to derive the relationship between the feature and the cost value.

In this sense, the other feature values can be used to predict a feature value for subjective feature that could not be otherwise determined from map data alone. The predicted feature value and/or cost value is not a mere amalgamation of map data, but instead represents the result of analysis to identify how a user-input can relate to these.

This method can also be carried out to estimate an unknown feature value for pairs of links across a complex node 12C, corresponding to junctions as described above. This operates in the same manner, with the feature value and cost value corresponding to the complex node 12C and an appropriate relationship defined for this complex node 12C.

In particular embodiments, the estimation may be via extrapolation and machine learning. In particular, the machine learning may include data which is publically accessible as known feature values for the cost parameter relating to that data and user feedback data as a feature with unknown feature values. For example, there may only be limited user feedback data in relation to how picturesque or safe a road is, while there is public data in relation to the type of road, the size of road and pollution levels that can be used to determine the relationship for prediction. In order to achieve this, the public data may first be accessed followed by the private data and the extrapolation then carried out.

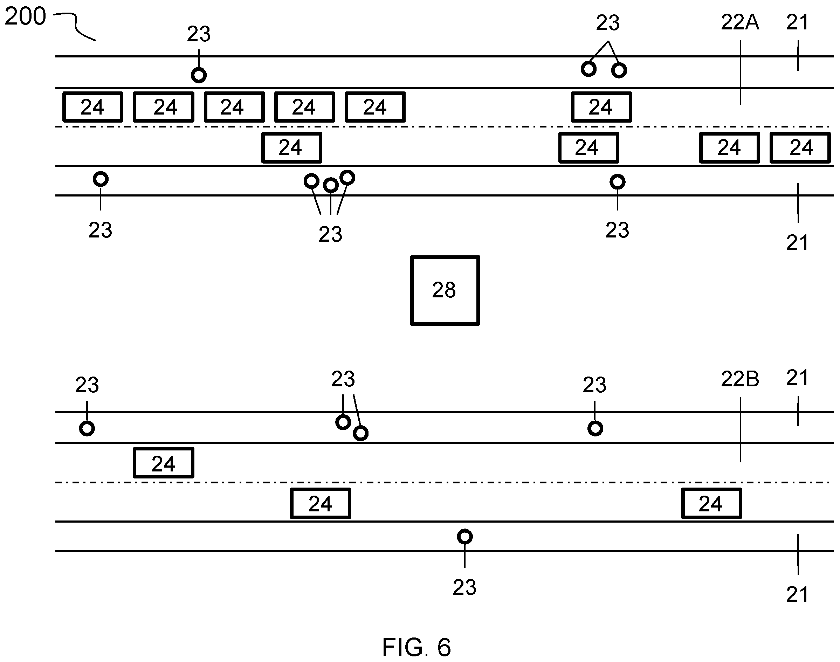

A further method according to the present disclosure can be used in the scenario depicted in the schematic Figure 6. This method relates to detecting a level of traffic using a plurality of mobile telephones. As shown in Figure 6, there is a first road 22A and a second road 22B. Each road includes a cycle path 21 provided adjacent thereto. A plurality of cyclists 23 are travelling on the cycle path 21. The cyclists 23 may have mobile telephones, such as smart phones, which comprise a microphone and a location determining device such as GPS. The microphone of the mobile phones of the cyclists 23 can be used to determine a noise level and the location determination device can be used to determine a location of the mobile telephone. This noise level and location information is then transmitted to a central server 28. The central server 28 then estimates the level of traffic at a given location based upon the noise level.

For example, in Figure 6, the first road 22A comprises a large number of cars 24 and hence the microphones of the mobile telephones of the cyclists 23 on the corresponding cycle path 21 will pick up a significantly larger amount of noise and it can be extrapolated that the road is a busy road. This contrasts to the second road 22B which is relatively quiet with fewer cars 24 and hence less noise will be detected.

Of course, the detection does not necessarily have to be solely from cyclists 23, but may also include data from pedestrians or other road users which are exposed to ambient noise. Likewise, the cyclists 23 do not have to be in cycle paths 21, but could be travelling on the roads 22A, 22B. This derived data may then be used to update a cost value of a link 14 associated with the roads 22A, 22B.

Each of the examples and embodiments discussed above may be combined with one another in order to supplement any navigation system.

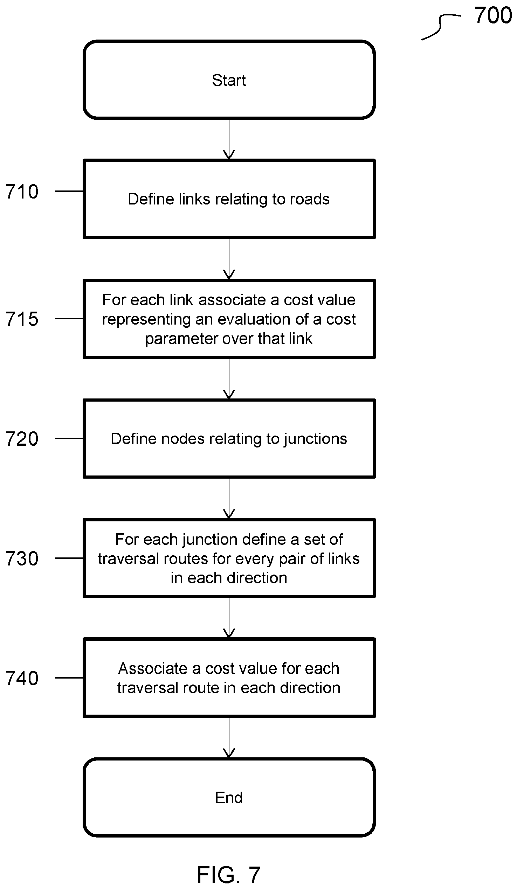

Examples and embodiments of the present disclosure will now be described with respect to the flowcharts of Figures 7 to 15.

Figure 7 represents a method 700 for generation of a map for use in any of the methods. Firstly, in step 710 a number of links are defined which relate to roads in the real world. For each of these links in step 715, cost values representing an evaluation of a cost parameter over the link is associated. The cost value may incorporate a number of features in a blended relationship as discussed above. The feature values may be read from a central database, either separate to or combined with the data defining the links (i.e. the map data).

Step 720 comprises nodes being defined relating to junctions. The nodes are defined at meeting points between two links (roads) and represent the physical junction at the location. As discussed above, the physical junction may be a simple junction such as one road extending transversely from another (i.e. a simple left or right hand turn) or a complex junction with three or more links meeting such as a roundabout. Each of the links will extend from at least one node, and will typically link two nodes unless the link represents a road which is a dead-end or cul-de-sac.

For each junction, and hence node, a set of traversal routes are defined. Each traversal route represents the traversal of that junction using a particular pair of links in a particular direction. Each of the traversal routes will have a different cost value associated with the traversal of the junction along the given route. For example, one route may require a turn across oncoming traffic which is typically slow compared to a turn away from oncoming traffic. The cost values are associated with each traversal in step 740. The cost value may be detected from other users traversing the junction (as discussed below) or may be derived based upon known feature values for the junction. The known feature values may include the angle between the roads, the presence of traffic lights, the elevation (turning uphill being more difficult), the number of lanes and/or whether there are any road areas that make the particular manoeuvre easier. For example, a cycle box that allows for safe waiting at the junction. For nodes which have a single pair of links extending therefrom, this is not a particularly useful exercise as there are no choices for a user traversing the junction. However, for complex nodes with multiple pairs this allows the cost value of different manoeuvres to be taken into account.

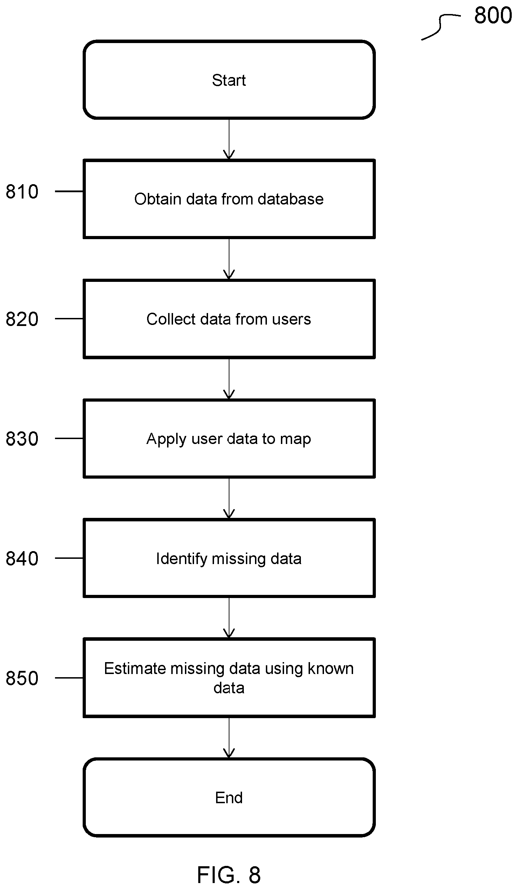

Having generated, or accessed a map that has already been generated such as by a central server, this map may have cost values applied to it according to the method 800 of Figure 8. Data representing feature values obtained from a database in step 810. This data is associated with, directly or indirectly, cost values for particular cost parameters. As discussed above, the cost parameters may include one or more of distance; time; safety; safety; gradient; road quality; aesthetics; and pollution.

Further data is then collected from users in step 820, this collected data being related, directly or indirectly, to cost value(s) for the cost parameters. This collected data may be a user's preference for or against a particular road or junction (and hence link or node), their review of its safety, aesthetic merit or the like. Alternatively, or additionally, the user data may be automatically sensed such as their speed through the junction, the time taken to traverse the junction, and/or their speed fluctuation across the junction. At the same time, location data is sensed and the user data is associated with the location data. This allows the user data to be associated with the cost value(s) with a particular link or node. In particular examples, the user data may come from, for example, a user's mobile telephone which includes sensors or a user input for review and a location determination module such as GPS. This allows the mobile telephone to automatically associate the user data and the location as it is recorded. The user data may be weighted in favour of more recent data in order to allow updates to a particular road or junction (and hence link or node) to be reflected. For example, recent roadworks may have affected the safety of the road or junction and hence the older data is less relevant.

The user data is then applied to a map according to step 830. This may form a part of the steps 715 or 740 in the map generating method of method 700 of Figure 7.

The user data may be incomplete, for example a particular road or junction (and hence link or node) may not have been traversed or reviewed by a user. Alternatively, a particular road or junction (and hence link or node) may have insufficient data to properly characterise it. There is thus missing data for a particular cost value for a particular link or node and this is identified in step 840. The missing data is then estimated to complete the population of the map according to step 850.

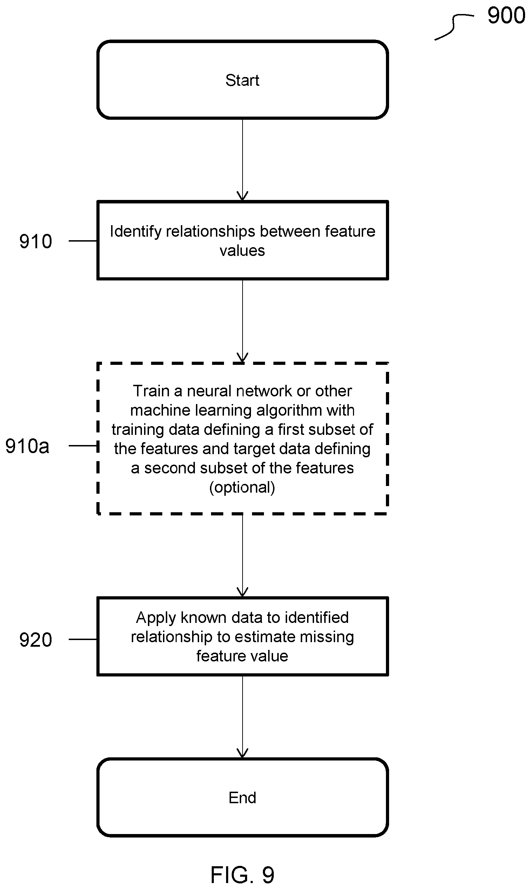

This estimation of missing data is set out in more detail according to the method 900 of Figure 9. Relationships between features are identified in step 910. For example, it may be determined that roads with low pollution are typically awarded positive reviews by users. Thus, a relationship between low pollution and a positive experience can be determined. Of course, in an actual system there may be many features each of which are inter-related and the relationships may be much more complex. It can be beneficial if the relationships are defined based upon, for example, publically accessible data which is present for generally all roads. Such data may include, for example, the road type (single track, highway, etc.), public air quality/pollution data, etc.. In this sense, globally known data can be used to estimate the likely much smaller set of user generated data.

For example, the relationship identification could be carried out by using a machine learning algorithm (step 910a), such as by training a neural network. The neural network may be any suitable network, such as a three layer back propagation neural network. The neural network can be trained using training data including a first subset of the cost parameters, and target data defining a second subset of the cost parameters. This will then result in an output that can be used on further data, such as a hidden layer in a three layer back propagation neural network.

The known data and the identified relationships are then applied so as to estimate cost parameter(s) for missing data.

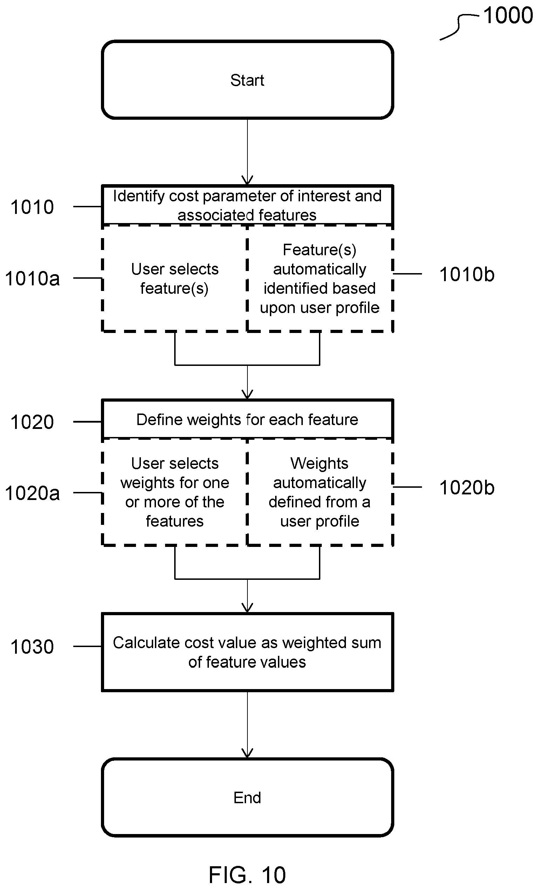

A method 1000 of determining a cost function is set out in Figure 10. As a first step 1010, a particular cost parameter is selected, relating to certain feature(s). Multiple features could be selected, or a blend thereof. The identification of the feature(s) may be carried out by a user selecting the features (step 1010a) which they are particularly concerned with, either for a single trip or for them in general. For example, the user may select that for this particular trip they want a very aesthetic route, so aesthetic quality may be a feature of interest. Alternatively, or additionally, the user may select that for all routes they want the safest route and hence safety features may be a feature of interest. The local trip selection and overall selection may both be applied at the same time.

Alternatively, or additionally, the features may be identified automatically based upon the cost parameter and a user profile (step 1010b). This is set out in more detail with respect to method 1100 described below with respect to Figure 1100, but in brief a user profile may indicate that the user has a tendency to avoid larger roads and this can then be used to select appropriate feature(s) for the user. This can be blended with a user selection as described above.

With the cost parameter having been identified, a weighting can be applied to each of the feature values according to step 1020 to form the cost value for the link. The weighting allows the identified feature values to be adjusted according to their relative importance. Again, this could be selected by a user (step 1020a) or automatically from a user profile (step 1020b). For example, a user may select their particular preference for a balance between safety and speed and the safety feature value(s) and time feature value can be weighted accordingly. Alternatively, the user profile may indicate a particular balance to be achieved.

A cost value is then calculated based upon the weighted sum of the feature values along a particular route according to step 1030.

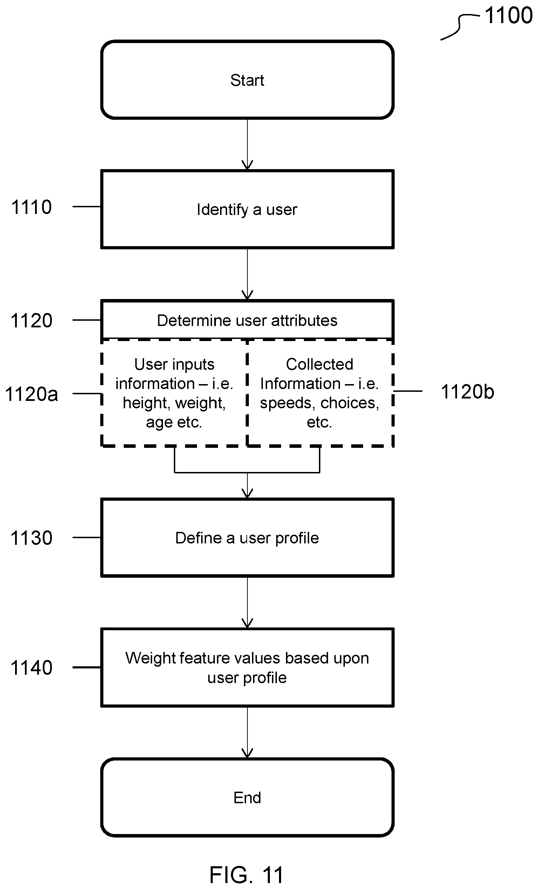

The use of the user profiles is set out according to method 1100 shown in Figure 11. As a first step 1110, a user is identified. This may be by the user logging in to a service, or there may be a hard link between the user and a particular device which is identified. User attributes are then determined according to step 1120. These user attributes may include one or more of height, weight, age, typical speeds, road choices, etc. The user attributes may be input by the user (or measured and input) such as height, weight or age (step 1120a). Alternatively, or in addition, user attributes may be derived from previously collected information. For example, if it is determined that the user has historically cycled along particular roads (and hence links) faster than the typical user it may be identified that the user is a quick cyclist. Likewise, if a user has historically deviated from a given route to move from large roads to smaller roads this can be identified.

A user profile is then defined according to step 1130. This user profile associates weights with particular user attributes according to the user. The definition may take place via machine learning, such as a neural network, linking particular user attributes with weights for each parameter. This allows the cost parameters to be appropriately weighted for the user in question.

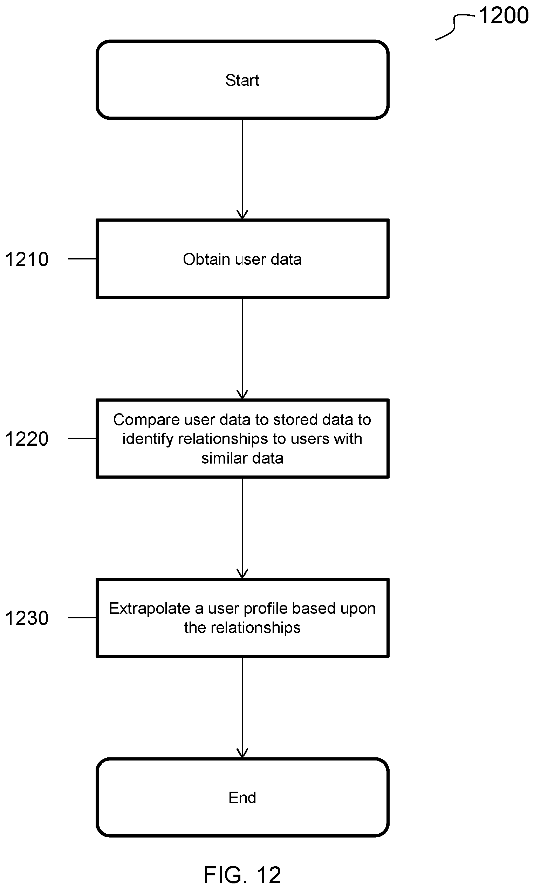

The definition of a user profile is set out in method 1200 of Figure 12. User data 1210 relating to user attributes is obtained according to step 1210. Again, this may be via a user input or via detected user behaviour. This user data is then compared to stored data in order to identify relationships between the user and other users with stored similar data (step 1220). The relationships may be similarly identified as discussed above with respect to the unknown road feature values. This is then used to extrapolate a user profile, including weighting values, based upon the relationships.

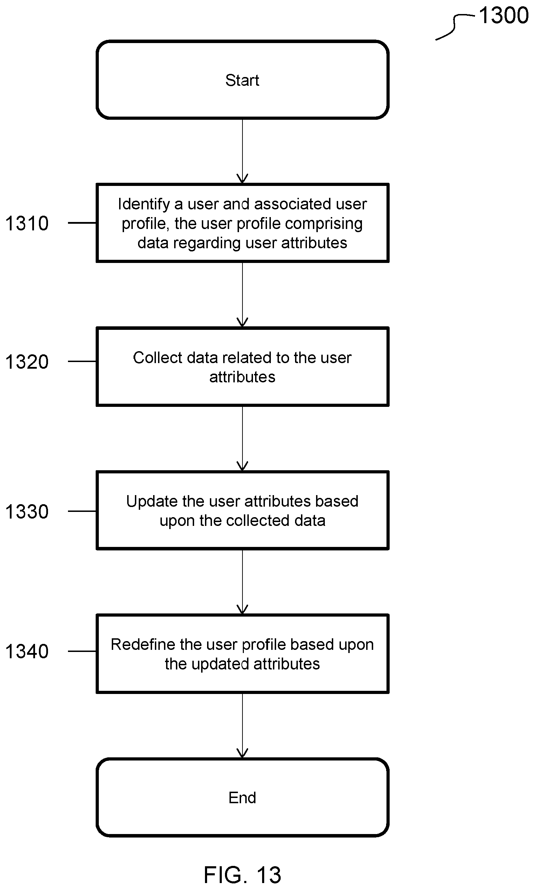

The user profile may be a one-off setting (such as merely taking the user's weight, height and age). Alternatively, the user profile may be a dynamic profile and Figure 13 shows a method 1300 for this dynamic user profile. A user is identified (step 1310), along with their associated user profile. This may generally be according to the methods 1100, 1200 of Figures 11 and 13. Further data is then collected in step 1320, the data related to the user attributes. The data may be a direct measure of a user attribute, such as a new weight reading, or may be related to the user attribute, such as vibration data indicating the quality of the suspension on a user's mode of transport.

The stored user attributes are then updated based upon the collected data according to step 1330. This updating can be weighted based upon previously collected data. For example, if a typically fast rider records a particularly fast time this may not alter their speed user attribute particularly as it is to be expected. The user profile is then redefined based upon the updated user attributes according to step 1340. This ensures that the user profile is kept up to date with any changes in the user, for example the user may become more comfortable with risk and have an altered balance between speed and safety.

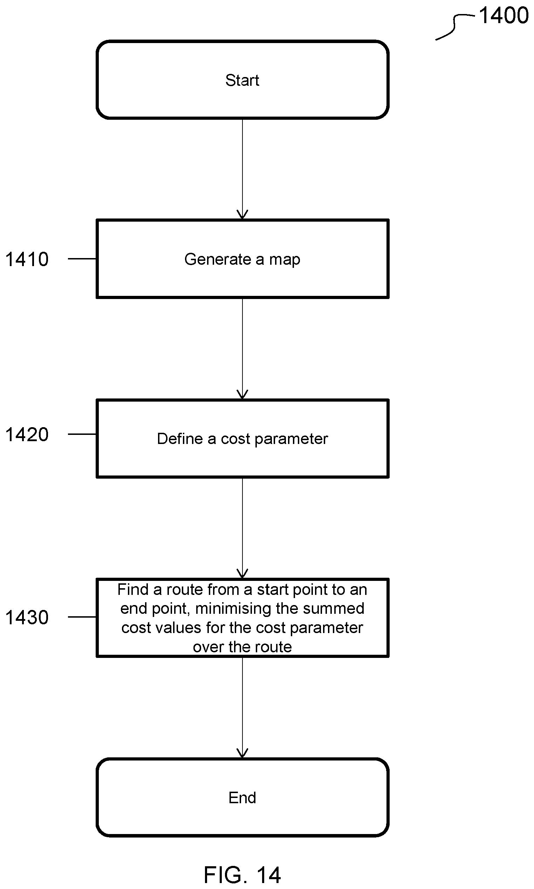

An overall example of the present disclosure is set out according to the method 1400 of Figure 14. The method 1400 first comprises generating a map 1410. The map may be individually generated for the method 1400 or may be pre-generated and accessed from a database. The map generation may be according to the methods 700, 800, 900 of Figures 7, 8 and 9. A cost parameter is then defined according to step 1420. The cost parameter represents the evaluation of one or more feature(s) over a route. Finally, a route is selected which minimises the cost value over the route (step 1430). Steps 1420 and 1430 may comprise steps according to methods 1000, 1100 and 1200 of Figures 10, 11 and 12.

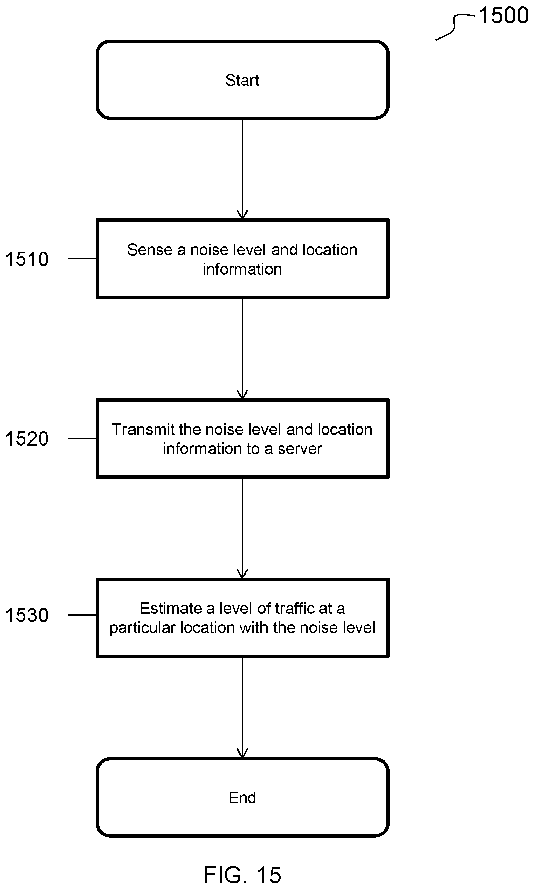

A further method 1500 according to the present disclosure is set out in Figure 15. In a first step 1510 a noise level and location information is sensed. This sensing is using the microphone and location determination device of a plurality of mobile telephones. The noise level and location information is then transmitted to a server (step 1520). This may be via a mobile network, mobile internet and/or Wi-Fi. The server then processes (step 1530) the collected noise level and location information in order to estimate a level of traffic at the location based upon the noise level. The mobile telephone may further transmit a time-stamp with the information, or the server may record a time-stamp that the information is received. This can be used to generate a noise profile for the location over the course of a day. For example, a particular road may only be busy at school drop-off and pick-up times if there is a school on that road. At other times of the day it may be a quiet road.

## Claims

1. A method of determining a route between a start point (12A) and an end point (12B) on a map defined by a plurality of links (14) for representing roads and a plurality of nodes (12) for representing junctions between roads, the links (14) meeting at respective nodes (12) and comprising a plurality of features, the method comprising:
accessing a database to obtain cost values based upon a plurality of features of the link (14) and their associated feature values for a cost parameter for a first group (14K) of one or more of the links (14), wherein the cost parameter is an overall value to be minimised over the route and the cost value is the evaluation of the cost parameter over a particular link,
wherein one of the plurality of feature values and hence the cost value is unknown for a second group (14U) of one or more of the links (14);
identifying a relationship in the first group (14K) between the feature value or cost value which is unknown for the second group (14U) and the plurality of known feature values;
using the identified relationship to estimate the unknown cost value for the links (14) in the second group (14U); and
finding a route from the start point (12A) to the end point (12B) via links (14) and nodes (12) that minimises the summed cost values over the route,
wherein the unknown feature value is a user-input feature value.

2. A method of determining a route between a start point (12A) and an end point (12B) on a map defined by a plurality of links (14) for representing roads and a plurality of nodes (12) for representing junctions between roads, at least two nodes (12C) of the plurality of nodes (12) being a complex node (12C) having at least three links (14) extending therefrom, the links (14) and the complex nodes (12C) each comprising one or more features, the method comprising:
accessing a database to obtain cost values based upon a plurality of features of a first complex node (12C) and their associated feature values for a cost parameter, wherein the cost parameter is an overall value to be minimised over the route and the cost value is the evaluation of the cost parameter over a particular link or node,
wherein one of the plurality of features and hence the cost value is unknown for a second complex node (12C);
identifying a relationship for the first complex node (12C) between the feature value or cost value which is unknown for the second complex node (12C) and the plurality of known feature values;
using the identified relationship to estimate the unknown cost value for the second complex node (12C); and
finding a route from the start point (12A) to the end point (12B) via links (14) and nodes (12) that minimises the summed cost values over the route,
wherein the unknown feature value is a user-input feature value.

3. The method of any preceding claim, wherein the unknown feature value is a user feedback value.

4. The method of any preceding claim, wherein the remaining feature(s) is/are publicly accessible data.

5. The method of any preceding claim, wherein the estimation is carried out via machine learning.

## Patentansprüche

1. Verfahren zum Bestimmen einer Route zwischen einem Startpunkt (12A) und einem Endpunkt (12B) auf einer Karte, die durch eine Vielzahl von Verbindungen (14) zur Darstellung von Straßen und einer Vielzahl von Knotenpunkten (12) zur Darstellung von Kreuzungen zwischen Straßen definiert ist, wobei sich die Verbindungen (14) an jeweiligen Knotenpunkten (12) treffen und eine Vielzahl von Merkmalen umfassen, wobei das Verfahren umfasst:
Zugreifen auf eine Datenbank, um Kostenwerte auf der Basis einer Vielzahl von Merkmalen der Verbindung (14) und deren damit verbundener Merkmalswerte für einen Kostenparameter für eine erste Gruppe (14K) der einen oder mehreren der Verbindungen (14) zu erhalten, wobei der Kostenparameter ein Gesamtwert ist, der über die Route minimiert werden soll, und der Kostenwert die Schätzung des Kostenparameters über eine spezielle Verbindung ist,
wobei einer der Vielzahl von Merkmalswerten und somit der Kostenwert für eine zweite Gruppe (14U) einer oder mehrerer der Verbindungen (14) unbekannt ist;
Identifizieren einer Beziehung in der ersten Gruppe (14K) zwischen dem Merkmalswert oder Kostenwert, der für die zweite Gruppe (14U) unbekannt ist, und der Vielzahl von bekannten Merkmalswerten;
Verwenden der identifizierten Beziehung, um den unbekannten Kostenwert für die Verbindungen (14) in der zweiten Gruppe (14U) abzuschätzen; und
Finden einer Route von dem Startpunkt (12A) bis zu dem Endpunkt (12B) über Verbindungen (14) und Knotenpunkten (12), welche die zusammengerechneten Kostenwerte über die Route minimiert, wobei der unbekannte Merkmalswert ein vom Nutzer eingegebener Merkmalswert ist.

2. Verfahren zum Bestimmen einer Route zwischen einem Startpunkt (12A) und einem Endpunkt (12B) auf einer Karte, die durch eine Vielzahl von Verbindungen (14) zur Darstellung von Straßen und einer Vielzahl von Knotenpunkten (12) zur Darstellung von Kreuzungen zwischen Straßen definiert ist, wobei mindestens zwei Knotenpunkte (12C) der Vielzahl von Knotenpunkten (12) ein komplexer Knoten (12C) mit mindestens drei sich von diesen erstreckenden Verbindungen (14) sind, wobei die Verbindungen (14) und die komplexen Knotenpunkte (12C) jeweils ein oder mehrere Merkmale umfassen, wobei das Verfahren umfasst:
Zugreifen auf eine Datenbank, um Kostenwerte auf der Basis einer Vielzahl von Merkmalen eines ersten komplexen Knotenpunkts (12C) und deren damit verbundener Merkmalswerte für einen Kostenparameter zu erhalten, wobei der Kostenparameter ein Gesamtwert ist, der über die Route minimiert werden soll, und der Kostenwert die Schätzung des Kostenparameters über eine spezielle Verbindung und Knotenpunkt ist,
wobei eines der Vielzahl von Merkmalen und somit der Kostenwert für einen zweiten komplexen Knoten (12C) unbekannt sind;
Identifizieren einer Beziehung für den ersten komplexen Knotenpunkt (12C) zwischen dem Merkmalswert oder Kostenwert, der für den zweiten komplexen Knotenpunkt (12C) unbekannt ist, und der Vielzahl von bekannten Merkmalswerten;
Verwenden der identifizierten Beziehung, um den unbekannten Kostenwert für den zweiten komplexen Knoten (12C) abzuschätzen; und
Finden einer Route von dem Startpunkt (12A) bis zu dem Endpunkt (12B) über Verbindungen (14) und Knotenpunkten (12), welche die zusammengerechneten Kostenwerte über die Route minimiert, wobei der unbekannte Merkmalswert ein vom Nutzer eingegebener Merkmalswert ist.

3. Verfahren nach einem der vorhergehenden Ansprüche, wobei der unbekannte Merkmalswert ein Nutzer-Feedback-Wert ist.

4. Verfahren nach einem der vorhergehenden Ansprüche, wobei das/die verbleibende(n) Merkmal(e) öffentlich zugängliche Daten ist/sind.

5. Verfahren nach einem der vorhergehenden Ansprüche, wobei die Schätzung über maschinelles Lernen vorgenommen wird.

## Revendications

1. Procédé de détermination d'un itinéraire entre un point de départ (12A) et un point d'arrivée (12B) sur une carte définie par une pluralité de liaisons (14) pour représenter des routes et une pluralité de nœuds (12) pour représenter des intersections entre des routes, les liaisons (14) se rejoignant au niveau de nœuds (12) respectifs et comportant une pluralité de caractéristiques, le procédé comportant :
l'accès à une base de données pour obtenir des valeurs de coût sur la base d'une pluralité de caractéristiques de liaison (14) et de leurs valeurs de caractéristiques associées pour un paramètre de coût pour un premier groupe (14K) d'une ou plusieurs des liaisons (14), dans lequel le paramètre de coût est une valeur globale à minimiser sur l'itinéraire et la valeur de coût est l'évaluation du paramètre de coût sur une liaison particulière,
dans lequel l'une de la pluralité de valeurs de caractéristiques et donc la valeur de coût est inconnue pour un deuxième groupe (14U) d'une ou plusieurs des liaisons (14) ;
l'identification d'une relation dans le premier groupe (14K) entre la valeur de caractéristique ou la valeur de coût qui est inconnue pour le deuxième groupe (14U) et la pluralité de valeurs de caractéristiques connues ;
l'utilisation de la relation identifiée pour estimer la valeur de coût inconnue pour les liaisons (14) dans le deuxième groupe (14U) ; et
la recherche d'un itinéraire du point de départ (12A) au point d'arrivée (12B) via des liaisons (14) et des nœuds (12) qui minimise la somme des valeurs de coût sur l'itinéraire, dans lequel la valeur de caractéristique inconnue est une valeur de caractéristique saisie par l'utilisateur.

2. Procédé de détermination d'un itinéraire entre un point de départ (12A) et un point d'arrivée (12B) sur une carte définie par une pluralité de liaisons (14) pour représenter des routes et une pluralité de nœuds (12) pour représenter des intersections entre des routes, au moins deux nœuds (12C) de la pluralité de nœuds (12) étant un nœud complexe (12C) ayant au moins trois liaisons (14) s'étendant à partir de celui-ci, les liaisons (14) et les nœuds complexes (12C) comportant chacun une ou plusieurs caractéristiques, le procédé comportant :
l'accès à une base de données pour obtenir des valeurs de coût sur la base d'une pluralité de caractéristiques d'un premier nœud complexe (12C) et de leurs valeurs de caractéristiques associées pour un paramètre de coût, dans lequel le paramètre de coût est une valeur globale à minimiser sur l'itinéraire et la valeur de coût est l'évaluation du paramètre de coût sur une liaison particulière ou un nœud particulier,
dans lequel l'une de la pluralité de caractéristiques et donc la valeur de coût est inconnue pour un deuxième nœud complexe (12C) ;
l'identification d'une relation pour le premier nœud complexe (12C) entre la valeur de caractéristique ou la valeur de coût qui est inconnue pour le deuxième nœud complexe (12C) et la pluralité de valeurs de caractéristiques connues ;
l'utilisation de la relation identifiée pour estimer la valeur de coût inconnue pour le deuxième nœud complexe (12C) ; et
la recherche d'un itinéraire du point de départ (12A) au point d'arrivée (12B) via des liaisons (14) et des nœuds (12) qui minimise la somme des valeurs de coût sur l'itinéraire, dans lequel la valeur de caractéristique inconnue est une valeur de caractéristique saisie par l'utilisateur.

3. Procédé selon l'une quelconque des revendications précédentes, dans lequel la valeur de caractéristique inconnue est une valeur de retour d'utilisateur.

4. Procédé selon l'une quelconque des revendications précédentes, dans lequel la ou les caractéristiques restantes sont des données accessibles au public.

5. Procédé selon l'une quelconque des revendications précédentes, dans lequel l'estimation est effectuée par apprentissage automatique.
